# EUROPEAN PATENT APPLICATION

(11) **EP 0 639 727 A1**
(43) Date of publication of application: **22.02.1995**
(21) Application number: 93113294.8
(22) Date of filing: 19.08.1993
(51) Int. Cl.: F16F 9/52, B60N 3/08, B60N 3/14

(54) **Dampers**

(71) Applicant: TOYOTA TSUSHO CORPORATION, Nagoya-shi, Aichi-ken (JP); TOYOTA JIDOSHA KABUSHIKI KAISHA, Aichi-ken (JP); THE FURUKAWA ELECTRIC CO., LTD., Tokyo (JP)
(72) Inventor: Miura, Hiroyuki c/o Toyota Tsusho Corporation, Nagoya-shi, Aichi-ken (JP); Toida, Koji c/o Toyota Jidosha Kabushiki Kaisha, Toyota-shi, Aichi-ken (JP); Shiroyama, Kaisuke c/o The Furukawa Electric Co., Tokyo (JP)
(74) Representative: Blumbach, Kramer & Partner

(57) **Abstract**

A damper comprises a case (20) comprising a hollow body having a chamber surrounded by an inner wall and filled with a viscous fluid, a moving member (11) being inserted within said chamber (22) of said case (20) and relatively moved to said chamber (22) thereof and having at least a portion which deforms in response to the change of viscosity resistance due to temperature change, wherein either the case or moving member is connected to a rotation driving source (10).

## Description

### BACKGROUND OF THE INVENTION

### Field of the Invention

The present invention relates to a damper, a rotary damper, and a reciprocating damper for damping a motion by means of the viscosity resistance of a viscous fluid, and it further relates to an opener device as an ashtray device, device having a movable member, and so on provided with the rotary and reciprocating damper.

### Description of the Prior Art

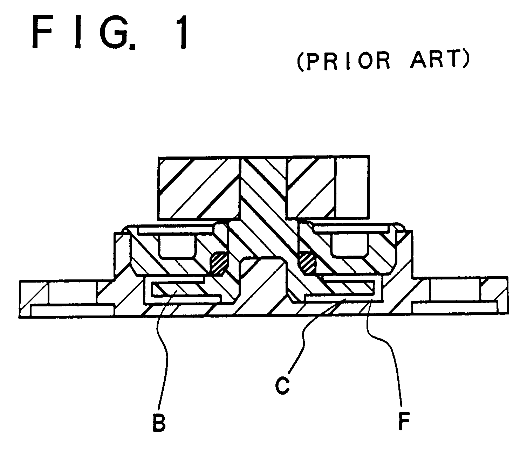

A prior art rotary damper using a viscous fluid is disclosed in Japanese Pat. Laid Open Pub. No.61-192937 which arranges a rotary plate B provided with circular arch portions on the both ends in a thin cylindrical accommodation chambers C in which a viscous fluid F is filled, as shown in Fig. 1.

The prior art rotary damper described above decelerates the rotating motion by employing the viscosity resistance of the viscous fluid filled in the accommodation chambers C. Therefore there was a disadvantage that the damping characteristics change and the decelerated rotating speed varies, since the viscosity resistance of the viscous fluid varies in response to the temperature changes.

In particular, when the temperature became 0°C or less, the viscosity resistance is suddenly increased and the damping and the decelerating make more action than is necessary, resulting in frequent problems in operation.

### SUMMARY OF THE INVENTION

Now, the present inventors have given their attention to the technical idea of the invention that the effective cross section of a moving member is varied in response to the variation in viscosity resistance of a viscous fluid due to temperature change.

It is a general object of this invention to roughly make uniform the variations in damping characteristics and in decelerated moving speed under any temperature change.

It is a more specific object of the invention to prevent any operating faults based on the variation of the damping characteristics.

It is another object of the invention to provide an ashtray device, the other devices in automobile, house and so on equipped with a damper having less change in damping characteristics due to temperature change.

It is still another object of the invention to provide a rotary damper having a small capacity and being excellent in damping characteristics.

It is a further object of the invention to provide a rotary damper whose rotating effective cross section is varied in response to the variation in viscosity resistance of a viscous fluid sealed in the damper due to temperature change.

It is a still further object of the invention to provide a rotary damper having a rotating member whose effective length in a radial direction of the case is varied in response to temperature change at low temperature.

It is another object of the invention to provide a rotary damper having a rotating member whose effective length in an axial direction of the case is varied in response to temperature change at low temperature.

A further object of the invention is to provide a rotary damper equipped with a rotating member made of a shape memory alloy.

A still further object of this invention is to provide a damper comprising; a case comprising a hollow body having a chamber surrounded by an inner wall and filled with a viscous fluid; and a moving member being inserted within said chamber of said case and relatively moved to said chamber thereof and having at least a portion which deforms in response to the change of viscosity resistance due to temperature change, thereby varying the effective cross section of said moving member in response to the temperature change.

Another object of this invention is to provide a rotary damper according to claim 1, wherein; said case comprises a hollow cylindrical body having a cylindrical chamber surrounded by an inner cylindrical wall and upper and lower bottom portions on both ends; said moving member comprises a rotating member being inserted within said cylindrical chamber of said case and relatively rotated within said cylindrical chamber thereof and having at least a portion which deforms in response to the change of viscosity resistance due to temperature change at low temperature, and one of said case or rotating member is connected to a rotation drive source.

Yet another object of this invention is to provide a reciprocating damper according to claim 1, wherein; said case comprises a hollow cylindrical body having a cylindrical chamber surrounded by an inner cylindrical wall and upper and lower bottom portions on both ends; said moving member comprises a piston member being inserted within said cylindrical chamber of said case and relatively reciprocated within said cylindrical chamber thereof and having at least a portion which deforms in response to the change of viscosity resistance due to temperature change at low temperature, and one of said case or piston member is connected to a reciprocating drive source.

A still further object of this invention is to provide a rotary damper comprising: a case having a hollow cylindrical body and bottom portions on both ends and forming a cylindrical chamber accommodating a viscous fluid in its internal portion; and a rotating member constituted by a rotatable member relative to the case, at least a portion of which can be deformed by temperatures so as to vary a rotating effective cross section, wherein either the above case or rotating member is connected to a rotating drive source.

Another object of this invention is to provide a rotating damper arranging the rotating member vertically to a shaft connected to the rotating drive source passing through the bottom portion on one side of the case, wherein the rotating member is constituted by wire rods having a given cross sectional shape made of a shape memory alloy which backs in a memorized shape at a predetermined temperature or more, and an effective diameter is reduced by deforming the rotating member in a reversed rotating direction in response to the increased viscous resistance of the viscous fluid at the above predetermined temperature or less.

Yet another object of this invention is to provide a rotating damper for arranging the differences in the deformed quantity and rotating effective diameter of the shape memory wire rod due to the rotating direction. This is done by placing a second wire rod side by side with the above shape memory wire rod. The second wire rod is shorter than the wire rod made of a shape memory alloy constituting the above rotating member, is made of the other material of the proper rigidity and supports the shape memory alloy wire rod in one rotating direction.

A still further object of this invention is to provide an opener device, an ashtray device and the other devices constituted so as to rotatably constitute either the above case in the rotating damper or the rotating member, in accordance with the motion of a movable portion provided with any one of an opener device for opening and closing a movable member related to the movable portion, an ashtray and a cigarette lighter in the ashtray device and the other devices having a movable member.

Another object of this invention is to provide a reciprocating damper comprising a cylinder in which a viscous fluid is filled, and said piston member comprises a circular piston plate, secured to a rod member coaxially provided within said cylinder, said circular piston plate being inserted in said cylinder and made of a shape memory alloy so that the effective cross sectional area may be varied in response to temperature change.

The damper of the invention is arranged so that the moving member may reduce the moving effective cross section, when the viscosity resistance of the viscous fluid accommodated in the case is increased with the lowering of temperature in order to restrain the variations of the damping characteristic and rotational speed thereof.

The rotating damper of the invention is arranged so that the rotating member constituted by the wire rods made of a shape memory alloy may be deformed in a reversed rotational direction by the viscosity resistance of the viscous fluid in order to decrease the effective diameter, when the viscosity resistance of the viscous fluid accommodated in the case is increased with the lowering of temperature.

The rotating damper of the invention is arranged so that some differences in the effective diameter may be caused by the deformation of the rotating member made of a shape memory alloy in the rotational direction of the rotating member. This is done by placing the rotating member of the second wire rod made of the other material side by side with the wire rod made of a shape memory alloy and controlling the deformation by supporting the wire rod made of a shape memory alloy with the second wire rod made of the other material.

The ashtray device and the other devices of the invention allow a deceleration to the motion of this movable portions equipped with an ashtray and cigarette lighter in the ashtray device and the other devices by constituting either the above case or rotating member of the rotary damper of the invention so as to be able to rotate, in accordance with the motion of the movable portion .

The rotary damper of the invention has the effect of controlling the variation in the damping characteristics and the change in the decelerated rotating speed by accordingly reducing and canceling the rotating effective cross section of the rotating member when temperature is decreased and the viscosity resistance of the viscous fluid is increased.

The rotary damper of the invention has the effect of achieving approximately uniform rotational damping characteristics and the decelerated rotating speed regardless of temperatures by deforming the rotating member made of a shape memory alloy in a reversed rotational direction and reducing its effective diameter when temperature is decreased and the viscosity resistance of the viscous fluid is increased.

In addition to the above effects of the invention, in the case that the rotating member made of a shape memory alloy rotates in its preceding direction, the rotating member of the other material supports the rotating member made of a shape memory alloy, allowing the latter to be slightly deformed. On the contrary, in the case that the rotating member of the other material rotates in its preceding direction, there is nothing for the rotating member made of a shape memory alloy to be supported with, and therefore a large deformation is caused. In this way some differences in the rotating effective diameter of the rotating member made of a shape memory alloy are produced, and thus the rotary damper of the invention has the effect of making the damping characteristics different depending on rotational directions.

The ashtray device, the opener device, and the other devices having the movable member of the invention has the effect of achieving an impact-free and uniform motion of the movable portions provided with the cigarette lighter and the ashtray in the ashtray device and the other devices by constituting the rotating damper so as to be rotated in accordance with the motion of movable portions of the ashtray device and the other devices, and thereby allowing an approximately constant deceleration to the movable portion regardless of any temperature change through the variation in the rotating effective cross section of the rotating member.

### BRIEF DESCRIPTION OF THE DRAWINGS

Fig. 1 is a vertical sectional view showing a prior art rotary damper;
Fig. 2 is a vertical sectional view showing a rotary damper as a first preferred embodiment of the invention;
Fig. 3 is a partially cutaway view in perspective of the rotary damper of the first preferred embodiment;
Fig. 4 is a sectional view showing a form of the rotating member of the first preferred embodiment at a normal temperature;
Fig. 5 is a sectional view showing a form of the rotating member of the first preferred embodiment at a low temperature;
Fig. 6 is a partially cutaway view in perspective of a rotary damper as a second preferred embodiment of the invention;
Fig. 7 is a vertical sectional view showing the rotary damper of the second preferred embodiment;
Fig. 8 is a sectional view showing a condition in the case that the rotating member of the second preferred embodiment rotates clockwise;
Fig. 9 is a sectional view showing a condition in the case that the rotating member of the second preferred embodiment rotates counterclockwise;
Fig. 10 is a partially cutaway view in perspective of an ashtray device of the second preferred embodiment;
Fig. 11 is a sectional view showing the ashtray device of the second preferred embodiment;
Fig. 12 is a sectional view showing the ashtray of the second preferred embodiment;
Fig. 13 is a sectional view showing the blade of a rotary damper as a third preferred embodiment of the invention;
Fig. 14 is a sectional view showing the blade of a rotary damper as a fourth preferred embodiment of the invention;
Fig. 15 is a sectional view showing a modification in various sectional forms of the blade;
Fig. 16 is a sectional view showing an alternative modification in the other form of the blade;
Fig. 17 is a vertical sectional view showing a piston type damper; and
Fig. 18 is a vertical sectional view showing a piston type damper.

### DETAILED DESCRIPTION OF PREFERRED EMBODIMENTS

Referring now to the drawings, the detail description of a rotary damper and an ashtray device as a preferred embodiment of the invention will be given in the following.

### (Constitution of the First Preferred Embodiment)

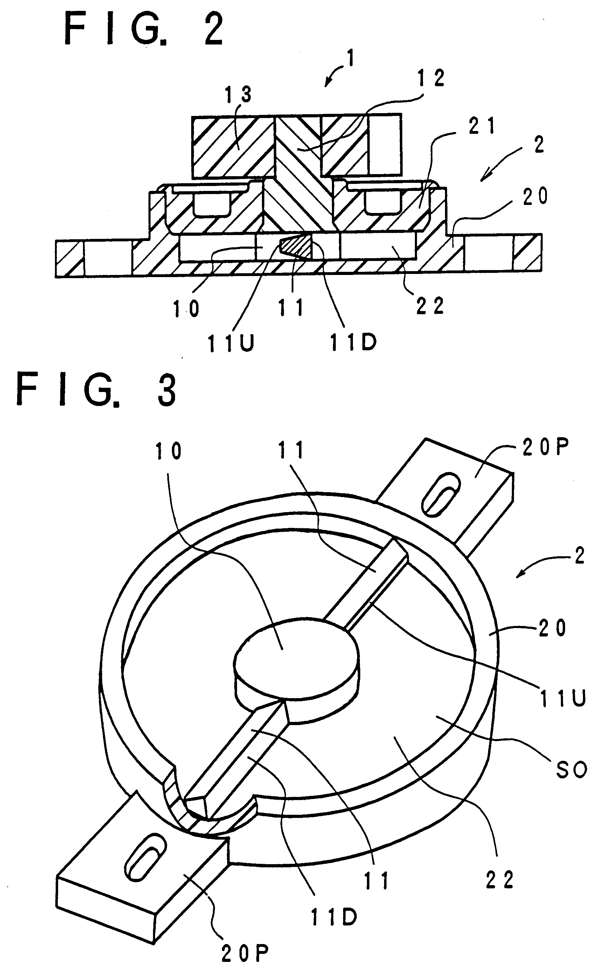

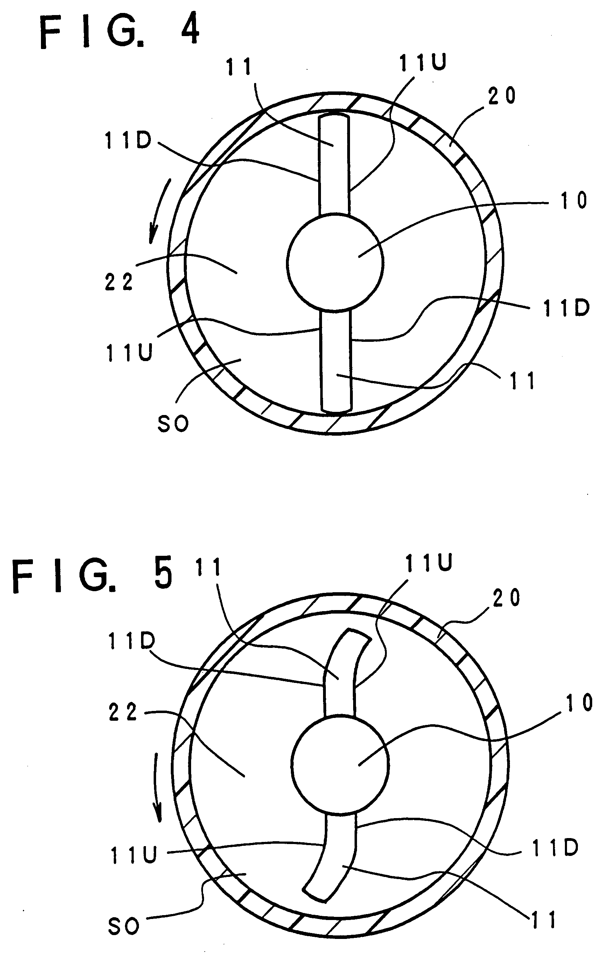

As shown in Figs. 2 and 5, in the rotary damper of the first preferred embodiment, each blade 11 of a rotating member 1 is composed of a shape memory alloy having a trapezoidal cross section and the rotating member 1 is inserted in a case body 20 of a case 2. Silicone Oil SO is filled in a case body 20 thereof as a viscous fluid, and then the cover member 21 of the case 2 is covered to the case body 20 thereof.

The rotary damper is fixed to a gear portion 13 for transmitting a rotation input, the gear portion 13 passing through the cover member 21 is formed integrally with a boss portion 10 of the rotating member 1.

The shape memory alloy used in the blades 11 of the rotating member 1 is composed of so-called "one way type" Ni-Ti alloy wires having a memory so as to back in a linear shape memorized when the temperature is increased above 0°C which is a transformation point. On the contrary, when the temperature is below 0°C, the shape memory alloy is transformed like a bow in a reversed rotational direction as shown in Fig. 5, in accordance with the increase in viscosity resistance due to the temperature decrease of Silicone Oil SO which is a viscous fluid, and the rotating effective radius is substantially decreased.

The blade 11 are constituted such that the Ni-Ti alloy described above is molded in a trapezoidal cross section, and two pieces of which are rotated at an angle of 90° so as to make a parallel upper bottom 11U and the lower bottom 11D perpendicular to each other and provided to the circular boss portion 10 with an interval of 180° as shown in Figs. 2 and 3 so as to form the blades 11. In the case that the lower bottom 11D of the major side is located on the leading side of the rotation, a large damping effect is achieved at a predetermined peripheral speed or more. On the contrary, in the case that the upper bottom 11U of the minor side is located on the leading side of the rotation, a small damping effect is achieved.

The boss portion 10 is composed of a resin compact and formed integrally with an axis 12. The boss portion 10 has a concave portion (not illustrated) which is provided at the center of the lower portion, engaged with a convex portion (not illustrated) formed at the center of the bottom portion of the case 2, while a resin gear portion 13 provided with the predetermined number of gears is formed integrally with the tip portion of the axis 12 by a hot welding method.

The case 2 is constituted by a resin case body 20 having projection portions 20P forming the holes for fixation on its left and right sides and charged with Silicone Oil SO. The upper portion of the case 2 is fixed to the cover member 21 with watertightness so as to form circular chambers 22 on the inside of the case 2. Once the blades 11 of the rotating member 1 rotate within the chamber 22, a damping action is added by virtue of the viscosity resistance of Silicone Oil SO.

### (Operation for the First Preferred Embodiment)

The overall operation for the first preferred embodiment is as follows.

In the rotary damper of the first preferred embodiment comprising the above constitution, when the counterclockwise rotation is transmitted to the rotating member 1 through the gear portion 13, the blades 11 within the chambers 22 of the case 2 rotate counterclockwise. Accordingly the wide lower bottom 11D of the wide blade 11 on the leading side pushes away Silicone Oil SO. Then, the rotating speed of the rotating member 1 is controlled by a deceleration due to the viscosity resistance of Silicone Oil SO.

When the temperature is lowered below 0°C, the shape memory alloy constituting the blades 11 gets out of its memory region and the viscosity resistance of Silicone Oil SO is increased. Therefore the blades 11 are deformed clockwise, i.e. the opposite direction of the rotation as shown in Fig. 5 in response to the increased viscosity resistance of Silicone Oil SO and the rotating effective radius is decreased. Thus, an approximately uniform deceleration effect is maintained and the rotating speed of the rotating member 1 is uniformly controlled.

As the blades 11 of the rotating member 1 have a trapezoidal cross section, some differences can be arranged in the damping characteristics and the rotating speed depending on rotational directions in the case of using the rotary damper of the invention at a constant peripheral speed or more.

### (Effects of the First Preferred Embodiment)

Thus, the rotary damper of the first preferred embodiment having the above constitution and operation has the effect of making it possible to maintain the damping characteristics and the decelerating effect uniform and to unify the decelerated rotational speed regardless of temperatures, even though the temperature may be lowered below 0°C the blades 11 made of a shape memory alloy is deformed and the rotating effective radius is decreased.

Since the blades are constituted by the wires made of the shape memory alloy having a simple trapezoidal cross section, the rotary damper in the first preferred embodiment exhibits a stable performance and has a merit from the viewpoint of cost.

The first preferred embodiment has a merit from the view point of space. Because the blades are deformed in the opposite direction of the rotation and it is unnecessary to the extra space to the deformation of the blade.

### (Constitution of the Second Preferred Embodiment)

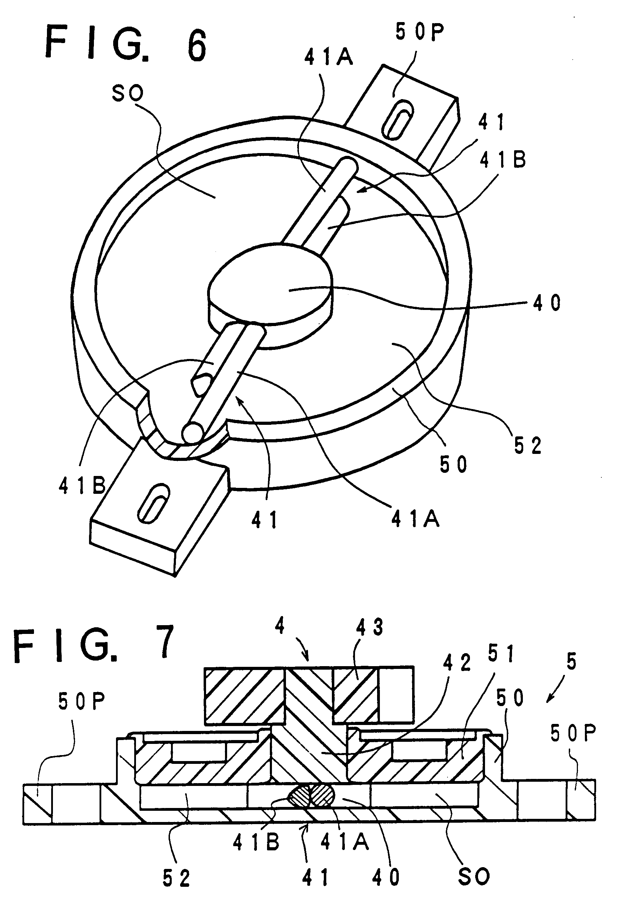

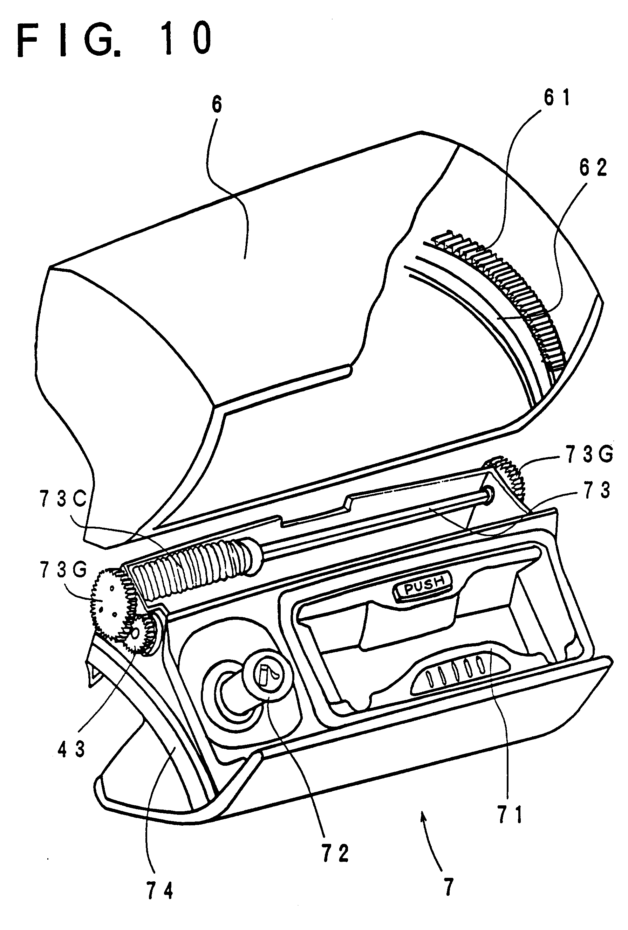

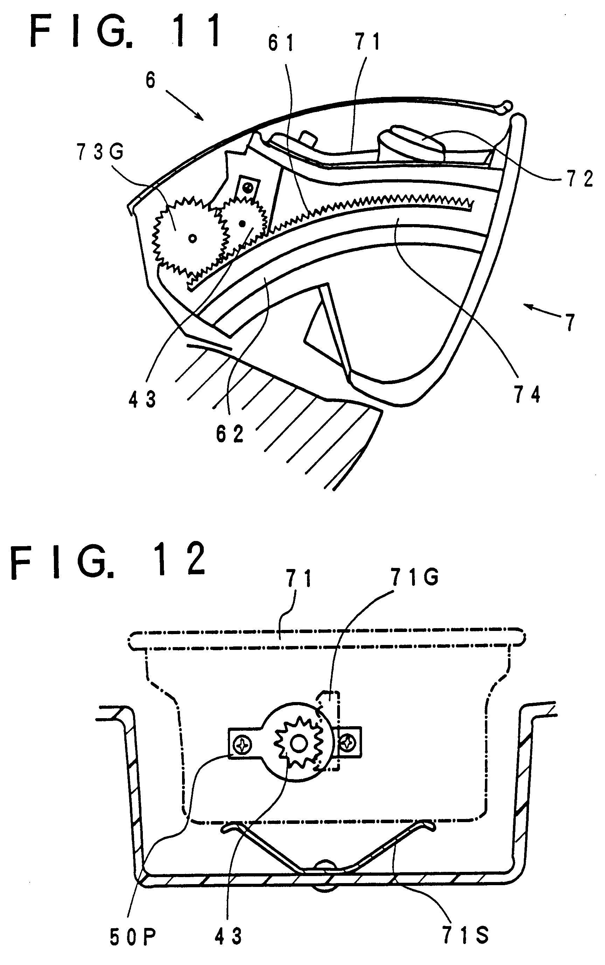

The ashtray device of the second preferred embodiment indicates an application of the rotary damper to the ashtray device for automobile use as shown in Figs. 10 through 12. As shown in Figs. 6 and 7, one of the most different points of the rotary damper in the second preferred embodiment from that in the first preferred embodiment described above, reside in that the blades 41 of a rotating member 4 are constituted such that each wire 41B made of a normal metal is placed, side by side with each wire 41A made of a shape memory alloy is placed.

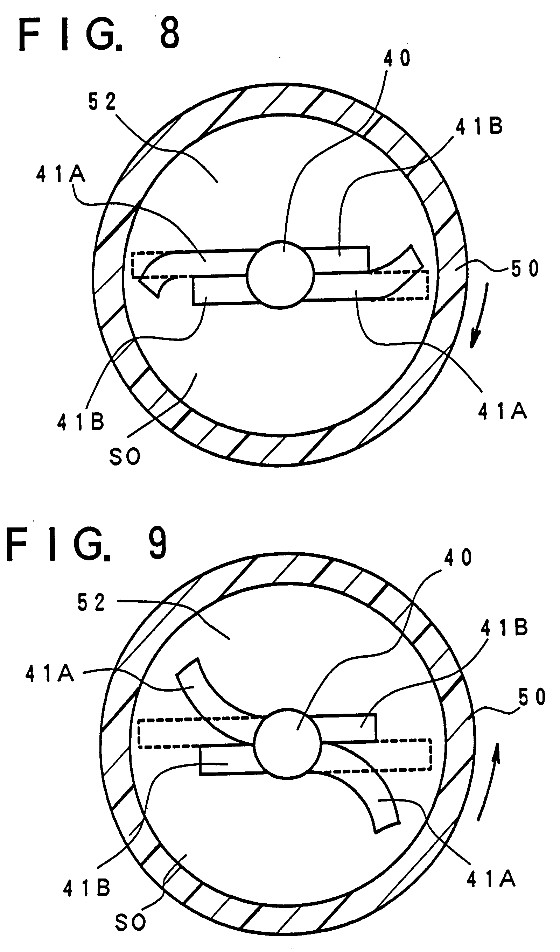

Similar to the first preferred embodiment, each wire 41A of the blades 41 of the rotating member 4 is constituted by the Ni-Ti alloy wire of one way type having a circular cross section of one way type, and it is arranged to gradually back in a linear form memorized when the temperature is increased above 0°C which is a transformation point. On the contrary, in the case that the temperature is below 0°C, each wire 41A of the blades 41 of the rotating member 4 is deformed like a bow in the opposite direction of the rotational direction as shown in Figs. 8 and 9, in accordance with the increase in the viscosity resistance of Silicon Oil SO which is a viscous fluid due to the temperature decrease, and thus the rotating effective radius is substantially reduced.

Blades 41 are constituted such that each wire 41A made of a shape memory alloy is brought into contact with each steel wire 41B, and each pair thus placed side by side is arranged with an interval of 180°, the steel wire 41B having a rice ball shape in cross section and a length approximately half that of shape memory alloy wire 41A. As shown in Figs. 8 and 9, in the case that the blades 41 rotates clockwise, i.e. in the direction there each wire 41A is on the leading side, within a case 5 charged with silicone oil, each steel wire 41B supports the wire 41A and therefore only the point of the wire 41A is deformed like a bow counterclockwise. On the contrary, in the case that the blades 41 rotate counterclockwise, i.e. in the direction where each steel wire 41B is on the leading side, each steel wire 41B does not support the wire 41A and therefore the wire 41A is largely deformed from its root.

A boss portion 40 is molded with a resin and constituted integrally with an axis 42 and the above wires 41A and 41B are fixed to the circumferential wall with an interval of 180° on a circumference. An axis 42 is fixed at the tip portion to a resin gear portion 43 having the predetermined number of gears and pitch by a hot welding method.

The case 5 is, as in the first preferred embodiment, constituted by a resin case body 50 having projection portions 50P forming the holes for fixation on its left and right sides and charged with Silicone Oil SO. The upper portion of the case 5 is fixed to the cover member 51 with watertightness so as to form circular chambers 52 on the inside of the case 5. The blades 41 and the boss portion 40 arranged within this chamber 52 rotate in accordance with the rotation of the gear portion 43.

As shown in Figs. 10 through 12, two pieces of the rotary dampers described above are provided in a box 7 constituting a movable portion sliding on a circular arch shaped guide 62 placed in parallel with each circular arch shaped rack gear 61 formed on both sides of a retainer 6 mounted on an instrument panel reinforcement (not illustrated) of the car.

The box 7 provides an ashtray 71 side by side with a cigarette lighter 72. A hexagon shaft 73 rolling a coil spring 73C is provided in the innermost of the box 7, a gear 73G engaged with each rack gear 61 is fixed to both ends of the box 7. The box 7 is arranged to be accommodated while sliding on the guide 62 through a guide 74 against the energizing force from the coil spring 73C and then locked by means of a lock mechanism (not illustrated).

A first rotary damper is fixed to the side wall of the box 7 by tightening screws through the projection portions 50P in close proximity to the left side gear 73G shown in Fig. 10 and set up so that the gear portion 43 may engage with the rack gear 61 and rotate in accordance with the travel of the box 7. The first rotary damper is set up to provide a small deceleration by the rotation of the rotating member 4 in the indicated direction by Fig. 9 when the box 7 is accommodated in the retainer 6, and on the contrary, it is arranged to provide a large deceleration by the rotation of the rotating member 4 in the indicated direction by Fig. 8 when the box 7 is projected from the retainer 6 in order to use the ashtray.

A second rotary damper is fixed by the projection portions 50P to the inside of the box 7 at the position where the gear portion 43 is engaged with a linear rack gear 71G formed vertically at the rear of the ashtray 71. The second rotary damper is arranged to provide a deceleration to the elevation of the ashtray 71 by the energizing force from a V letter shaped plate spring 71S mounted under the ashtray 71. The second rotary damper for this ashtray 71 is made smaller in decelerating performance than that of the first rotary damper for providing a deceleration to the overall box 7.

### (Operation and Effects of the Second Preferred Embodiment)

The overall operation and effects of the second preferred embodiment are as follows.

The ashtray device of the second preferred embodiment according to the constitution described above, can be accommodated in the retainer 6 by pushing it against an energizing force from the coil spring 73C and a small decelerating force from the first rotary damper as shown in Fig. 9, when the box 7 is accommodated.

When the lock mechanism is unlocked in order to use the ashtray, the box 7 is projected by the energizing force from the coil spring 3C. In accordance with this motion, the gear portion 43 rotates while engaging with the rack gear 61. Thus, the rotating member 4 rotates in the indicated direction by Fig. 8 to provide a large deceleration, and then, the box 7 is thereby projected smoothly.

In the case that the projecting operation of the above box 7 is carried out at a low temperature of 0°C or below, the wire 41A made of a shape memory alloy is in the status of losing its memory. Therefore, the point of the wire 41A is deformed counterclockwise like a bow by the increased viscosity resistance of Silicone Oil SO as shown in Fig. 8 so as to substantially decrease the rotating effective radius. Thus, the box 7 can smoothly be projected with the similar speed and time to those at a normal temperature, even though much time was spent in completing projecting of such a box under an excessive deceleration in the prior art.

Since the wire 41A is constituted by one way type Ni-Ti alloy, it is deformed at low temperatures in accordance with the increase in viscous resistance of the silicone oil and a uniform deceleration and damping can be provided.

When the ashtray 71 accommodated in the box 7 is also removed at low temperatures, a push button shown in Fig. 10 is pushed and unlocked so as to elevate the ashtray 71 by the energizing force from the plate spring 71S. Since the gear portion 43 is rotated by the linear rack gear 71G, a proper deceleration is provided as is so at a normal temperature to this gear portion 43 so as to make it possible to smoothly elevate the ashtray 71 by the deformation of the wires 41A in the second rotating damper as described above.

Both of the box 7 and the ashtray 71 can effectively be provided with deceleration over the entire stroke regardless of the length in stroke by means of the first and second compact rotary dampers as described above.

### (The Third Preferred Embodiment)

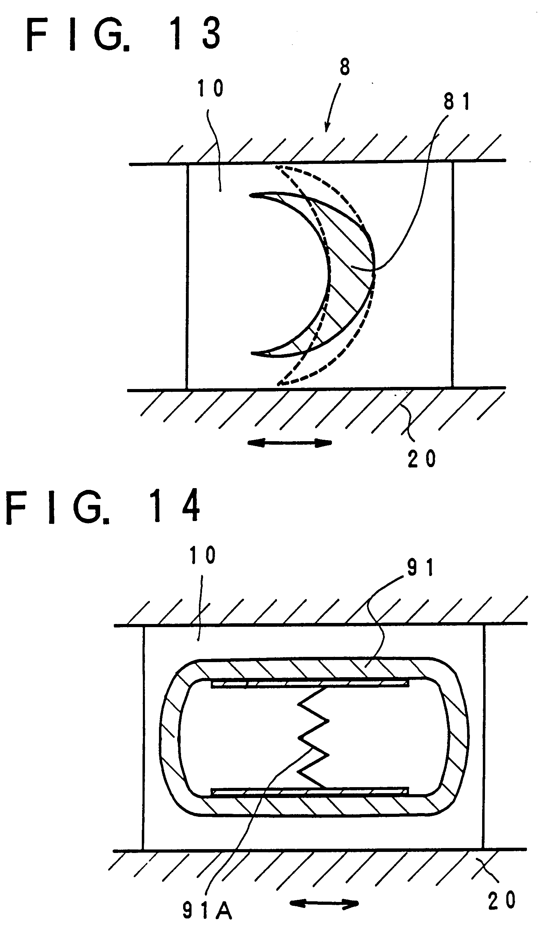

The preferred embodiments described above decreased the rotating effective radius of each rotating member made of a shape memory alloy when the temperature was lowered. The rotary damper of a third preferred embodiment is, however, constituted by a two-way type Cu-Zn-Al alloy which maintains a crescent moon shape in cross section indicated by broken lines at the transformation point, i.e. 0 or more and which alters its shape in cross section as indicated by full lines so as to lessen the resistance at the transformation point or less, as shown in Fig. 13. The rotary damper of the third preferred embodiment is arranged so as to prevent the excessive deceleration and damping by forming some gaps above and under the blade at low temperatures. Since the blade 81 has a crescent moon shape in cross section, some differences can be provided in deceleration and damping performance, depending on the rotational directions.

### (The Fourth Preferred Embodiment)

In a fourth preferred embodiment, each resin made blade 91 of the rotating member is constituted as a hollow and elliptical shape having a full width as shown In Fig. 14 and a spring 91A made of a Ni-Ti alloy is interposed between the vertical walls so as to make the height in the upper or lower direction of the blade 91 smaller in accordance with the increased viscosity resistance of a viscous fluid at a transformation point or less.

While the embodiments of the present invention, as herein disclosed, have been represented, it is to be understood that the present invention are not always restricted by these embodiments and that any alternations and additions are possible so far as they are not opposed against the technical ideas any skilled persons recognize from the description of the patent claims.

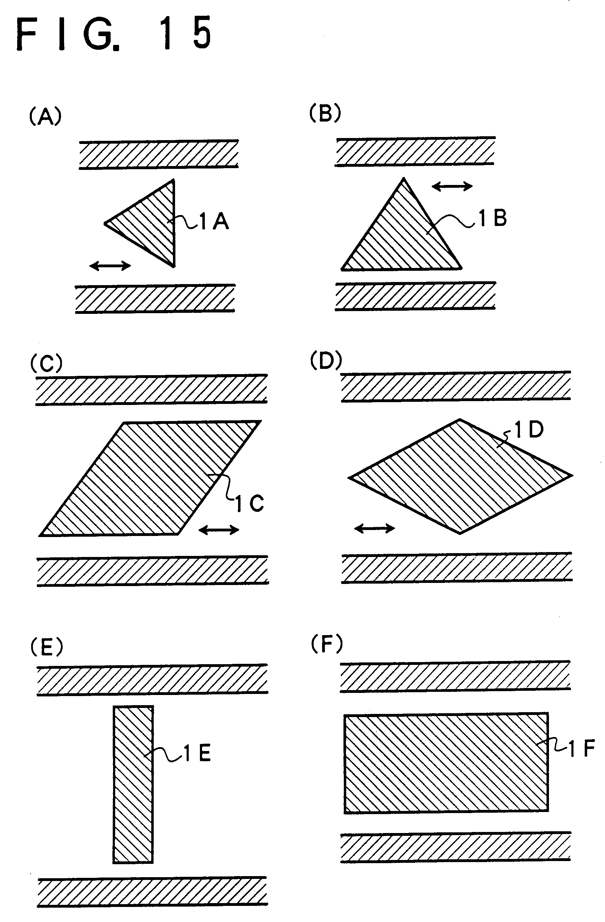

Although the blades comprising wires or wire rods in the above described preferred embodiments adopted trapezoid, circular or rice ball shape as a shape in cross section, any other modifications of various shapes in cross section, such as triangular shapes 1A and 1B, rhomboid shapes 1C and 1D, rectangular shapes 1E and 1F, etc., as shown in Fig. 15, might be adopted.

The third and fourth preferred embodiments explained on the examples having the thickness of the blade varied (i.e., length in the axial direction of the case), but it is possible to adopt such a blade, as of a type which is adjustable in inclination (i.e., angle of attack) of the blade as well.

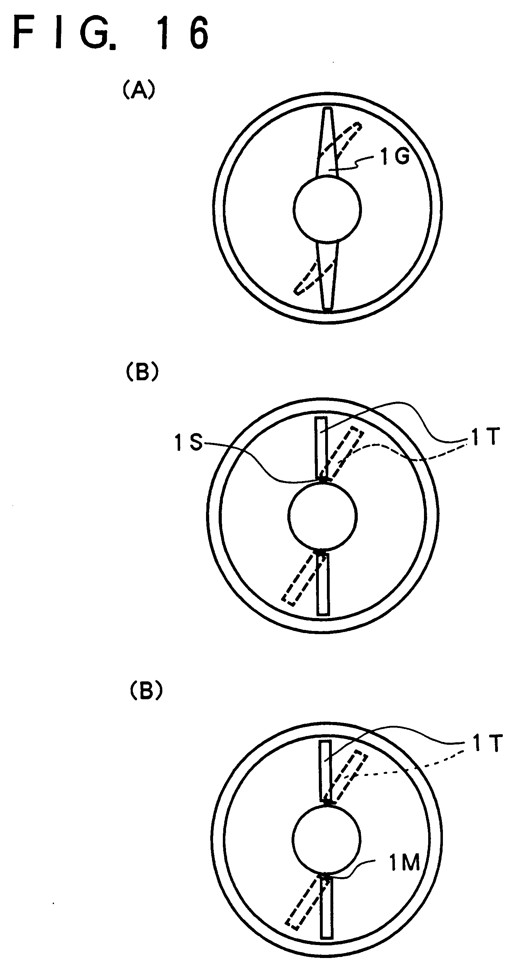

In the above preferred embodiments, the blade in its entirety is constituted by a shape memory alloy having a uniform cross section. However, as shown in Fig.16, the present invention might adopt such a mode as of a tapered shape, i.e. more deformation is provided to the place in closer proximity to the point as a convergent shape so that the sectional area may become gradually smaller accordingly as the blade 1G is closer to the point; such a mode[Fig. 16 (B)] as has a tip portion 1T is largely bent from a contraction 1S by contracting the sectional area bottom portion of the blade; such a mode [Fig. 16(C)] as employs a shape memory alloy 1M only at the bottom portion of the blade; such a mode as is constituted by the combination of one-way type shape memory alloy and a bias spring; and such a mode as is constituted by a bimetal.

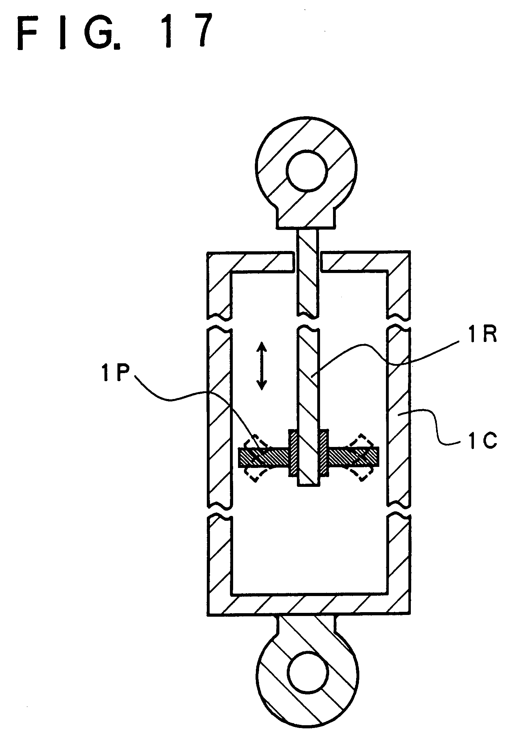

With reference to the ashtray device of the second preferred embodiment, a rotary damper was adopted from the standpoint of miniaturization. However, if there is room for space at not only the ashtray device, but also any one of a trunk cover, door check, window, bonnet, shock absorber, glove compartment, cup holder, engine mount, instrument mount, cassette tape deck, compact disc deck, antenna, and the other device having a moving member in an automobile, house and so on, it may be of course possible to use a piston-type (reciprocating) damper, in which a cylinder 1C filled with a viscous fluid includes a rod 1R provided with a circular piston 1P made of a shape memory alloy being variable in the effective cross section depending the variation of viscous resistance thereof in response to temperature change as shown in Fig. 17.

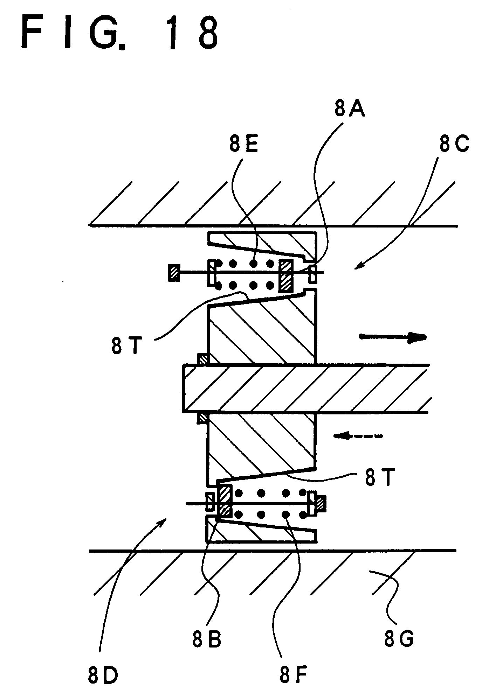

In the other piston-type damper as shown in Fig. 18, the gaps between tapered holes 8T and a first and second valve plate 8A, 8B pressed by a first and second spring 8E, 8F made of a shape memory alloy in a first and second valve device 8C, 8D are varied in response to the variation of viscous resistance of the viscous fluid filled in a cylinder 8G due to temperature change.

The piston type dampers as shown in Figs. 17 and 18 may restrain the variation of the damping characteristic and moving speed thereof based on temperature change.

It is possible to adopt a form which keeps the memorized shapes at the transformation point, less, or more and can transform its shape with the increase, or decrease in resistance of the viscous fluid at the transformation point, more, or less.

In the above preferred embodiment, the rotating member was rotated by the gear portion, however it may be possible to adopt such a mode as arranged to rotate by the gears engraved on the external circumferential wall of the case, and to fix the rotating member and the blade thereto.

Furthermore in the present invention, the rotating member may comprise a member varying the axial effective length of the case and the gap between the member and the bottom portions of both ends of the case in response to the change of the temperature.

In the present invention, the portion of the rotating member may comprise a one-way type shape memory alloy which backs in a memorized shape at a predetermined temperature or more.

In the present invention, the portion of the rotating member may comprise a two-way type shape memory alloy.

In the present invention, the rotating member may be at least one or more pieces in a form of bar, plate, wire or wire rod.

In the present invention, the rotating member may have any one of a trapezoidal cross section, a circular cross section, and a crescent moon shaped cross section.

In the present invention, a spring made of a shape memory alloy may be interposed between plates members provided up and down, and the rotating member is a blade coated by a synthetic resin film enriching in stretching property.

In the present invention, the shape in cross section of the rotating member may be at least one of triangle, rhombus or rectangle.

In the present invention, the rotating member may be a rectangle in cross section which has the length in the circumferential direction of the case being larger than that in the axial direction of the case.

In the present invention, the rotating member may be a rectangle in cross section which has the length in the circumferential direction of the case is smaller than the axial length of the case.

In the present invention, the rotating member may be at least one of a convergent type blade, blade having a contraction portion at the bottom portion, blade using a shape memory alloy only at the bottom portion, blade incorporating a one-way type shape memory alloy with a bias spring or blade constituted by bimetal.

In the present invention, one of the case or rotating member may be rotatable in response to the motion of a movable portion with an opener device having a movable member related to the movable portion.

In the present invention, one of the case or rotating member may be rotatable in response to the motion of a movable portion with an ashtray and a cigarette lighter of an ashtray device.

In the present invention, one of the case or moving member may be movable in response to the motion of a movable portion with a device having a movable member related to the movable portion.

In the present invention, the case may comprise a cylinder in which a viscous fluid is filled; and the piston member comprises a circular piston plate, secured to a rod member coaxially provided within the cylinder, the circular piston plate having a first and second valve device which comprise a first and second valve plate inserted within a first and second tapered hole having a first and second opening at end thereof, and a first and second spring inserted within the first and second tapered hole and made of a shape memory alloy, the first and second spring pressing the first and second valve plate in opposite directions, thereby varying the gap between the first and second valve plate and the first and second tapered hole by the variation of viscous resistance thereof in response to temperature change.

## Claims

1. A damper comprising:
a case comprising a hollow body having a chamber surrounded by an inner wall and filled with a viscous fluid; and
a moving member being inserted within said chamber of said case and relatively moved to said chamber thereof and having at least a portion which deforms in response to the change of viscosity resistance due to temperature change; thereby varying the effective cross section of said moving member in response to the temperature change.

2. A rotary damper according to claim 1, wherein:
said case comprises a hollow cylindrical body having a cylindrical chamber surrounded by an inner cylindrical wall and upper and lower bottom portions on both ends;
said moving member comprises a rotating member, inserted within said cylindrical chamber of said case and relatively rotated within said cylindrical chamber there of, having at least a portion which deforms in response to the change of viscosity resistance due to temperature change at low temperature; and
one of said case or rotating member is connected to a rotation drive source.

3. A reciprocating damper according to claim 1, wherein:
said case comprises a hollow cylindrical body having a cylindrical chamber surrounded by an inner cylindrical wall and upper and lower bottom portions on both ends;
said moving member comprises a piston member being inserted within said cylindrical chamber of said case and relatively reciprocated to said cylindrical chamber thereof and having at least a portion which deforms in response to the change of viscosity resistance due to temperature change at low temperature, and
one of said case or piston member is connected to a reciprocating drive source.

4. A rotary damper according to claim 1 or 2, wherein:
said case comprises a hollow and cylindrical body and bottom portions on both ends and forming a cylindrical chamber for accommodating a viscous fluid in its internal portion; and
said rotating member comprises a member inserted into said chamber and being a rotatable member relative to said case, at least a portion of which is constituted by a deformable member by temperatures and which can vary the rotating effective cross section;
either said case or rotating member being connected to a rotation driving source.

5. A rotary damper according to claim 2 or 4, wherein:
said rotating member comprises a member varying its effective length in the radial direction of said case by deforming itself in a reversed rotating direction and the gap between said member and the inner cylindrical wall of said case in response to the change of the temperature.

6. A rotary damper according to any of claims 2, 4 or 5, wherein:
said rotating member comprises a member having at least a portion made of a shape memory alloy.

7. A rotary damper according to claim 6, wherein:
said rotating member is provided perpendicularly to a shaft which is connected to the rotation driving source and pass through one of the bottom portion of said case, the rotating member made of a shape memory alloy having a given sectional shape, backing in the memorized shape at a predetermined temperature or more, and reducing its effective diameter by deforming itself in a reversed rotating direction in response to the increased viscosity resistance of the viscous fluid at said predetermined temperature or less.

8. A rotary damper according to claim 7, wherein:
a first wire made of shape memory alloy constituted said rotating member is placed side by side with a second wire made of the other material which has a proper rigidity and a length shorter than that of the first wire, and supports said first wire made of a shape alloy.

9. A reciprocating damper according to claim 3, wherein:
said case comprises a cylinder in which a viscous fluid is filled; and
said piston member comprises a circular piston plate, secured to a rod member coaxially provided within said cylinder, said circular piston plate being inserted in said cylinder and made of a shape memory alloy so that the effective cross sectional area may be varied in response to temperature change.

10. A damper according to any of claims 1 to 9, wherein:
one of said case or moving member is movable in response to the motion of a movable portion in any one of a trunk cover, door check, bonnet, engine mount, instrument mount, shock absorber, glove compartment, cup holder, antenna, cassette tape deck, compact disk deck in the automobile, devices having a movable member in the house, and so on.
